Europäisches Patentamt

European Patent Office

Office européen des brevets

(11) Veröffentlichungsnummer: **0 364 678**

**A1**

# (12) EUROPÄISCHE PATENTANMELDUNG

(21) Anmeldenummer: 89114036.0

(22) Anmeldetag: 29.07.89

(51) Int. Cl.5: **C05F 17/00 , C05F 17/02 , B01F 15/00 , B01F 7/26**

Die Bezeichnung der Erfindung wurde geändert (Richtlinien für die Prüfung im EPA, A-III, 7.3).

(30) Priorität: 26.09.88 DE 3832600

(43) Veröffentlichungstag der Anmeldung:
25.04.90 Patentblatt 90/17

(84) Benannte Vertragsstaaten:
AT BE CH DE ES FR GB GR IT LI LU NL SE

(71) Anmelder: Dyckerhoff & Widmann
Aktiengesellschaft
Erdinger Landstrasse 1
D-8000 München 81(DE)

Anmelder: HUTEC HOLZMANN
UMWELTTECHNIK GMBH
Taunusanlage 1
D-6000 Frankfurt 1(DE)

Anmelder: PREUSSAG
AKTIENGESELLSCHAFT
Karl-Wiechert-Allee 4
D-3000 Hannover(DE)

(72) Erfinder: Klaus, Dieter Brocks
Waldschänkenweg 5
D-3410 Northeim 1(DE)

(74) Vertreter: Patentanwälte Dipl.-Ing. F.W. Möll
Dipl.-Ing. H.Ch. Bitterich
Langstrasse 5 Postfach 2080
D-6740 Landau/Pfalz(DE)

(54) Verfahren zum Kompostieren von in flüssiger Form vorliegenden Abfällen.

(57) Zum Kompostieren von in flüssiger Form vorliegenden, tierische und/oder menschliche Ausscheidungen enthaltenden Abfällen, wie Gülle, Abwasser oder Klärschlamm, wird ein Verfahren vorgeschlagen, bei dem diese Abfälle in einem geschlossenen Behälter unter Zugabe von biologisch abbaubaren kohlenstoffhaltigen Substanzen, wie z.B. Stroh, in zerkleinerter Form durch Aufwirbelung mittels eines oder mehrerer Dispergierwerkzeuge unter Eintragung von mechanischer Energie und unter kontrollierter Zufuhr von Luft in eine suspensoide Dispersion mit hoher Viskosität umgewandelt und danach in einem aeroben Rotteverfahren kompostiert werden. Die mechanische Energie wird durch Anwendung eines in bestimmter Weise ausgebildeten Dispergierwerkzeuges im Wege von Kavitations- oder Hohlsogeffekten eingetragen, was eine physikalische und chemische Umwandlung der Flüssigkeit in eine Masse von hoher Viskosität zur Folge hat. Infolge der in feinster Verteilung eingearbeiteten Luft setzt auf der Rotte der Kompostierprozeß schnell ein und läuft unter aeroben Verhältnissen beschleunigt ab, so daß schon nach relativ kurzer Zeit Kompost zur Verfügung steht, der unmittelbar als organisches Düngemittel verwendet werden kann.

## Verfahren zum Kompostieren von in flüssiger Form vorliegenden Abfällen, wie Gülle, Abwasser, Klärschlamm oder dergleichen

Die Erfindung betrifft ein Verfahren zum Kompostieren von in flüssiger Form vorliegenden, insbesondere tierische und/oder menschliche Ausscheidungen enthaltenden Abfällen, wie Gülle, Abwasser, Klärschlamm oder dergleichen, sowie eine Vorrichtung zur Durchführung dieses Verfahrens.

Abfälle, die tierische und/oder menschliche Ausscheidungen enthalten, werden mit festen Stoffen, wie Stroh, Torf, Laub oder Erde gemischt in fester Form als Dung oder Mist oder in flüssiger Form als Jauche oder Gülle seit Menschengedenken zur Düngung von landwirtschaftlich genutzten Flächen verwendet. Bedingt durch Massentierhaltung einerseits und durch die Änderung der menschlichen Lebensgewohnheiten andererseits, insbesondere die in und im Umkreis von Städten vorherrschende große Bevölkerungsdichte fallen solche Abfälle nicht nur vorwiegend in flüssiger Form, sondern auch in sehr großen Mengen an.

Die große Menge solcher flüssigen Abfälle führt, wenn sie auf landwirtschaftlich genutzte Flächen ausgebracht wird, deshalb in zunehmendem Maße zu einer Überdüngung der Böden. Dadurch erhalten die Pflanzen ein Überangebot an Nährstoffen, das sie selbst in der Vegetationsperiode nicht verwerten können und das auch der Boden nicht mehr speichern kann. Der dünnflüssige Zustand dieser Abfälle hat vor allem auch in Verbindung mit Niederschlägen zur Folge, daß die Stoffe, die von den Pflanzen nicht aufgenommen werden können, den Boden durchspülen und auslaugen; dabei gelangen vor allem Nitrate und Spurenelemente aus dem Bereich des Wurzelraumes der Pflanzen in tiefere Bereiche des Bodens und verunreinigen das Grundwasser.

Das gleiche gilt für Klärschlamm, also die ebenfalls in flüssiger Form vorliegenden Rückstände von Kläranlagen, die oft noch Schadstoffe, wie Schwermetalle, Dioxin oder dergleichen enthalten und deshalb nicht unmittelbar zur Düngung verwendet werden dürfen, sondern auf besondere Deponien gebracht werden müssen.

Darüber hinaus ist aufgrund der Verarmung oder Verödung vieler Böden eine Kompostierung bzw. Humifizierung dieser flüssigen Abfälle zur Bildung von Nährstoffen für Pflanzen nur begrenzt möglich. Bei der Humifizierung bauen aerobe Mikroorganismen feste organische Substanzen allmählich biologisch ab und wandeln diese in Humus um. Voraussetzung für eine unter aeroben Bedingungen ablaufende Humifizierung sind ein für den mikrobiellen Abbau erforderlicher Wassergehalt und eine ausreichende Belüftung, d.h. Sauerstoffversorgung des Bodens sowie ein für die Wirkung der aeroben Mikroorganismen geeignetes Kohlenstoff-Stickstoff-(C/N)Verhältnis.

Vor diesem Hintergrund liegt der Erfindung die Aufgabe zugrunde, eine Möglichkeit zu schaffen, um solche in flüssiger Form vorliegenden Abfälle möglichst schnell und wirksam kompostieren bzw. humifizieren zu können, um sie dann in mikrobiell aufgeschlossener Form als Dünger dem Boden zuführen zu können.

Nach der Erfindung wird diese Aufgabe verfahrensmäßig dadurch gelöst, daß die flüssigen Abfälle in einem geschlossenen Behälter unter Zugabe von biologisch abbaubaren kohlenstoffhaltigen Substanzen, wie z.B. Stroh, Holz oder dergleichen in zerkleinerter Form durch Aufwirbelung mittels eines oder mehrerer Dispergierwerkzeuge unter Eintragung von mechanischer Energie und unter kontrollierter Zufuhr von Luft in eine suspensoide Dispersion mit hoher Viskosität umgewandelt und danach in einem aeroben Rotteverfahren kompostiert werden.

Zweckmäßig wird die mechanische Energie mittels eines durch das Dispergierwerkzeug erzeugten Kavitations- oder Hohlsogeffektes eingetragen und die Zufuhr von Luft unmittelbar in den Bereich der Aufwirbelung der Flüssigkeit so gesteuert, daß in dem genannten Bereich ein örtlich begrenztes Vakuum aufrecht erhalten wird. Zweckmäßig wird die Luft mittels eines durch das Vakuum bedingten Soges zugeführt und der Sog zur Aufrechterhaltung des Vakuums begrenzt.

Den flüssigen Abfällen kann eine geringe Menge einer aerobe Mikroorganismen enthaltenen Biomasse, wie z.B. Kompost, zugesetzt werden. Die dispergierten Abfälle werden zweckmäßig in einem Absetzbecken zwischengelagert und danach auf eine Rotte gelegt.

Das Rotteverfahren wird zweckmäßig mehrstufig durchgeführt, wobei die zu kompostierende Masse von einer Vorrotte über eine Hauptrotte in eine Nachrotte umgesetzt wird. Dabei wird die Vorrotte lagenweise aufgebaut, wobei zwischen zwei Lagen von dispergierten Abfällen jeweils eine Lage von biologisch abbaubaren kohlenstoffhaltigen Substanzen, wie z.B. Stroh, Holz oder dergleichen angeordnet wird.

An biologisch abbaubaren kohlenstoffhaltigen Substanzen werden insgesamt etwa 1 bis 3 % der Masse der flüssigen Abfälle zugegeben.

Grundlage der Erfindung ist die Erkenntnis, daß die Natur von jeher entscheidenden Einfluß auf die Lebensräume auf der Erde hatte und ständig versucht, organogene und biogene Stoffe in Kreisläufen zu erhalten, wobei allerdings oft die Strukturen dieser Stoffe verändert werden. Dies geschieht in der Natur mit hohem Energieeinsatz vor allem durch Wind, Wasser und Temperaturunterschiede, aber auch durch bestimmte Bewegungsabläufe und durch Transport dieser Stoffe; die Zeit spielt dabei keine Rolle. Das Ergebnis waren und sind teilweise heute noch in Uferzonen von Flüssen gute Humusböden und Schwarzerdelagen sowie Lössböden. Mit der Erfindung wird das Ziel verfolgt, bestimmte Abfälle für eine gewisse Zeitspanne aus dem natürlichen biologischen Umwandlungsprozeß herauszunehmen, um diesen im Sinne einer Beschleunigung beeinflussen zu können.

Nach der Erfindung wird die zu behandelnde Flüssigkeit mittels eines Dispergierwerkzeugs zunächst sehr intensiv gemischt; dabei werden feste Bestandteile einerseits mittels des Dispergierwerkzeugs selbst auf mechanischem Wege, andererseits aber auch durch Reibung stark zerkleinert. Zugleich wird in einem begrenzten Raum verstärkt mechanische Energie eingetragen, und zwar nach dem an sich bekannten Prinzip der Kavitation bzw. des Hohlsoges. Bei der Rotation des Dispergierwerkzeuges mit einer Drehzahl von etwa 1.800 Umdrehungen pro Minute und einer Umfangsgeschwindigkeit von etwa 38 bis 44 Meter pro Sekunde, wird im Bereich der Störkörper ein Abreißen des Flüssigkeitsstromes und damit Kavitation erzwungen. Kavitation entsteht, wenn eine Flüssigkeit mit hoher Geschwindigkeit entlang eines festen Körpers strömt und infolge einer Unstetigkeit der Oberfläche des Körpers nicht mehr folgen kann, sondern sich von dieser ablöst. An dieser Stelle entsteht ein Unterdruck; infolge dieses Unterdruckes verdampft die Flüssigkeit an dieser Stelle entsprechend dem einer jeden Temperatur zugeordneten Dampfdruck. Diese Erscheinung ist jedoch in hohem Maße instabil. Beim Zusammenbrechen der im Unterdruckbereich entstandenen, mit Flüssigkeitsdampf gefüllten Blasen entsteht ein Implosionseffekt, durch den große Kräfte ausgelöst werden, die hier auf die Oberfläche des festen Körpers wirken. Dabei kann es zu örtlicher Korrosion der Oberfläche des Körpers kommen.

Nach der Erfindung wird durch die Zugabe von biologisch abbaubaren kohlenstoffhaltigen Substanzen, sogenannter Kohlenstoffträger, einerseits eine Steuerung des C/N-Verhältnisses erreicht. Andererseits werden den Wasserstoffionen, die infolge des Aufbrechens von Wasserstoffbrücken durch die Eintragung mechanischer Energie frei werden, Kohlenstoffatome angeboten, mit denen sie neue Bindungen eingehen können; dadurch werden Korrosionserscheinungen an den festen Körpern vermieden. Dazu kommt ein Hydratationseffekt, d.h. die Anlagerung von Wassermolekülen bzw. die Bildung neuer Verbindungen mit Wasser, auf den die beobachtete Zunahme an Trockensubstanz durch die erfindungsgemäße Dispergierung schließen läßt.

Wesentlich für die Erfindung ist weiterhin eine Stabilisierung des Kavitations- oder Hohlsogeffektes dadurch, daß man in den Bereich, wo der Sog am heftigsten ist, kontrolliert Luft eintreten läßt. Die Menge an eingesogener, einperlender Luft darf dabei nur so groß sein, daß das Vakuum nicht gebrochen wird, d.h. daß der Druck unterhalb des atmosphärischen Luftdruckes gehalten wird. Die Einarbeitung von Luft ist ein wesentlicher Bestandteil des erfindungsgemäßen Verfahrens. Einerseits bieten die dadurch entstehenden Mikroporen den aeroben Mikroorganismen ausgezeichnete Angriffspunkte, wodurch der spätere Verrottungsprozeß begünstigt und beschleunigt wird. Andererseits enthält die Luft neben Sauerstoff auch Stickstoff, der nach Umsetzung die Düngewirkung des erhaltenen Kompostes verstärkt.

Darüber hinaus hat das erfindungsgemäße Verfahren den Vorteil, daß durch die Dispergierung aus den flüssigen Abfällen eine thixotrope Eigenschaften aufweisende Masse von hoher Viskosität entsteht, die nicht nur unmittelbar nach der Dispergierung, sondern auch nach einer 24-stündigen Alterung in nachgeschalteten Absetzbecken, wo geringe Mengen von Wasser ausgeschieden werden, noch pumpbar ist und so lagenweise auf eine Rotte gebracht werden kann. Infolge der Feinstverteilung von Luft in der dispergierten Masse setzt danach der Rotteprozeß sofort ein und läuft unter aeroben Verhältnissen beschleunigt ab, so daß nach einer vergleichsweise kurzen Zeit von etwa 7 bis 8 Wochen schon Kompost als Düngemittel zur Verfügung steht.

Gegenstand der Erfindung ist noch eine Vorrichtung zum Dispergieren der flüssigen Abfälle mit mindestens einem in einem geschlossenen Behälter an einer Antriebswelle angeordneten und um eine Drehachse umlaufenden Dispergierwerkzeug, das als kreisförmige Scheibe ausgebildet ist, die an ihrem Umfang mit einer Anzahl von dicht nebeneinander angeordneten Störkörpern versehen ist, von denen zumindest Teilbereiche aus der Ebene der Scheibe herausragen und wobei im Bereich des Dispergierwerkzeuges Einrichtungen für die Zufuhr von Luft vorgesehen sind.

Das Verhältnis des Durchmessers des Dispergierwerkzeuges zum Durchmesser des Behälters beträgt etwa 1 zu 2. Dadurch entsteht zwischen dem Dispergierwerkzeug und der Wandung des Behälters ein Ringraum, in dem eine um eine zur Drehachse des Dispergierwerkzeuges parallele Achse schwenkbare und feststellbare Barriere für den rotierenden Flüssigkeitsstrom angeordnet ist.

Die Störkörper sind zweckmäßig als zahnförmige, über den Umfang der Scheibe hinausragende Vorsprünge ausgebildet, die neben einer etwa radial zur Drehachse verlaufenden und unter einem Winkel Alpha zur Ebene der Scheibe nach außen geneigt aus dieser herausragenden Schneide in einer vorzugsweise doppelt gekrümmten Oberfläche in eine rückwärtige, etwa in der Ebene der Scheibe liegende Spitze auslaufen. Der äußere Rand der Störkörper verläuft zwischen dem äußeren Ende der Schneide und der rückwärtigen Spitze zweckmäßigerweise stetig gekrümmt.

Am Umfang der Scheibe können zwischen den einzelnen Störkörpern Durchbrechungen vorgesehen sein. Diese Durchbrechungen sind zweckmäßig als Langlöcher ausgebildet, die etwa tangential zum Umfang der Scheibe verlaufen.

Entlang des Umfangs der Scheibe sind zweckmäßig Austrittsöffnungen für Luft vorgesehen, die über einen in der als Hohlwelle ausgebildeten Antriebswelle axial verlaufenden Luftkanal mit der Außenluft in Verbindung stehen. Die Austrittsöffnungen sind zweckmäßig gleichmäßig über den Umfang der Scheibe verteilt angeordnet.

Zweckmäßig ist in geringem Abstand von der Scheibe konzentrisch zu dieser und in einer zu deren Ebene parallelen Ebene eine Deckscheibe mit etwa gleichem Durchmesser angeordnet, wobei der zwischen diesen beiden Scheiben gebildete Zwischenraum der Luftzufuhr dient.

Auf der Antriebswelle können zwei oder mehr Dispergierwerkzeuge in gegenseitigem Abstand voneinander übereinander angeordnet sein; diese Dispergierwerkzeuge können auch unterschiedliche Durchmesser aufweisen.

Ein so ausgebildetes Dispergierwerkzeug dient in hervorragender Weise der Durchführung des erfindungsgemäßen Verfahrens, nämlich der Dispergierung der flüssigen Abfälle unter Eintragung mechanischer Energie und Einarbeitung von Luft in fein verteilter Form.

Durch die Ausbildung der Störkörper mit einer in Drehrichtung weisenden Schneide wird ein hydraulischer Mahlstrom erzeugt, der die Zerkleinerung der festen Bestandteile bis hin zur kolloiden Dispersion begünstigt. Der Mahlstrom kann durch Anordnung mehrerer Dispergierwerkzeuge übereinander noch verstärkt werden.

Zugleich werden die in zerkleinerter Form zugegebenen Kohlenstoffträger, wie z.B. Stroh, mitgenommen und in feinste Bestandteile zerlegt, vor allem aber im eigentlichen Reaktionsbereich verfügbar gehalten. Durch die zahnförmige Ausgestaltung der Störkörper und die doppelt gekrümmte Form ihrer Oberfläche entsteht hinter den geraden Schneiden eine in einer rückwärtigen Spitze mündende Mulde, in der der Kavitations- oder Hohlsogeffekt zur Wirkung kommt. Zusätzlich wird wie in einem Strudel die Zentrifugalkraft aus der rotierenden Masse der Flüssigkeit wirksam; dieser Effekt wird noch verstärkt durch die erfindungsgemäß vorgesehene Barriere, die während der Drehung des Dispergierwerkzeuges in den Mahlstrom geschwenkt werden kann. Da die Massen im Zentrum der Rotation nur verzögert nachströmen, wird der Hohlsogeffekt noch verstärkt. Durch die Anordnung der Luftaustrittsöffnungen entlang des Umfanges der Scheibe, insbesondere aber durch Ausbildung eines umlaufenden Spaltes zwischen der eigentlichen Scheibe und einer Deckscheibe gelingt es, die infolge des Vakuums kontrolliert eingesogene Luft dort in die Masse einzuarbeiten, wo der Sog am heftigsten ist, z.B. hinter der Barriere.

Nach dem erfindungsgemäßen Verfahren bzw. mit der dazugehörigen Vorrichtung lassen sich nicht nur flüssige Abfälle, wie Gülle, Abwasser und dergleichen zwecks beschleunigter Kompostierung bearbeiten, sondern auch Klärschlamm sowie Abfälle aus der Obst- und Gemüseindustrie, wie auch in Wasser aufgeschwemmte Rückstände aus der Saftbereitung in Form von Trestern.

Eine Ausführungsform der Erfindung wird nachstehend anhand der Zeichnung näher erläutert. Es zeigt

Fig. 1 eine schematische Darstellung des Ablaufes des erfindungsgemäßen Verfahrens,

Fig. 2 einen Längsschnitt durch einen zum Dispergieren der Flüssigkeit geeigneten Behälter,

Fig. 3 einen Querschnitt durch den Behälter entlang der Linie III-III in Fig. 1,

Fig. 4 einen Ausschnitt aus einer Draufsicht auf ein Dispergierwerkzeug,

Fig. 5 in spiegelbildlicher Form eine Ansicht in Richtung V-V in Fig. 4,

Fig. 6 einen Schnitt entlang der Linie VI-VI in Fig. 4 und

Fig. 7 einen Ausschnitt aus einem Längsschnitt entlang der Linie VII-VII in Fig. 4.

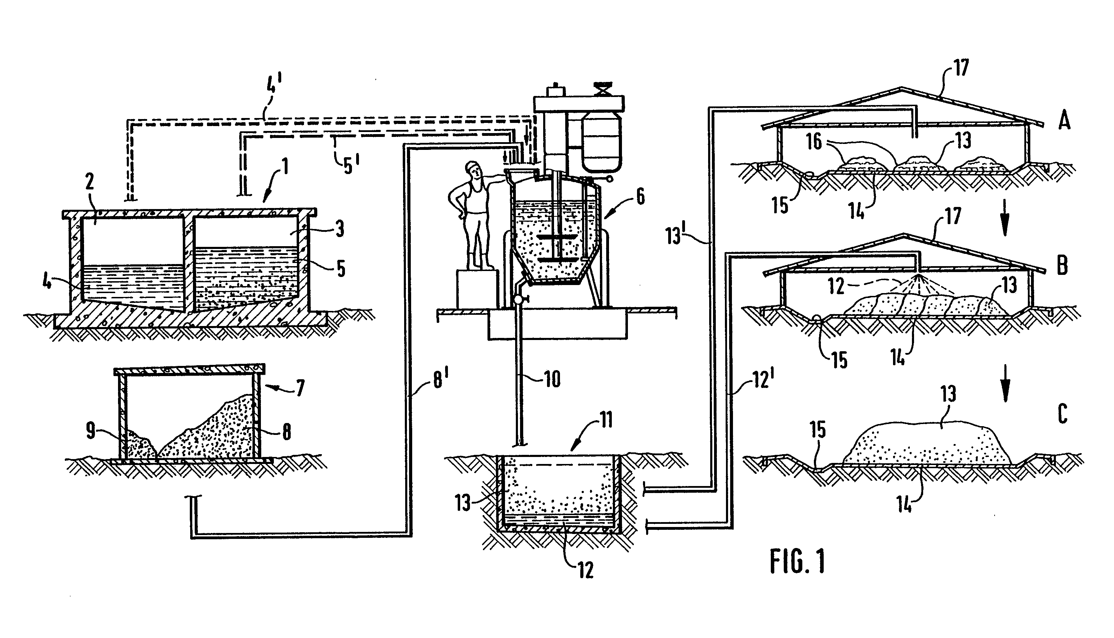

Fig. 1 zeigt schematisch eine Übersicht über das erfindungsgemäße Verfahren und die zu seiner Durchführung notwendigen Einrichtungen.

Ein Behälter 1 dient zunächst der Sammlung der zu behandelnden Flüssigkeiten. Nur um die Variabilität des Verfahrens zu zeigen, ist der dargestellte Behälter 1 mit zwei Kammern 2 und 3 ausgestattet und ist angedeutet, daß in einem solchen Behälter entweder Gülle 4 (Kammer 2) oder Klärschlamm 5 (Kammer 3) gelagert werden kann. Durch eine punktierte Linie 4' bzw. eine gestrichelte Linie 5' ist angedeutet, wie Gülle 4 oder Klärschlamm 5 in eine Dispergiervorrichtung 6 gebracht werden kann.

Dem Behälter 1 benachbart befindet sich ein Lagerraum 7 für biologisch abbaubare kohlenstoffhaltige Substanzen, wie z.B. Stroh 8, und eine Biomasse, wie z.B. Kompost 9. Durch eine Linie 8' ist angedeutet, wie auch diese Massen in die Dispergiervorrichtung 6 gebracht werden können.

In der Dispergiervorrichtung 6, die weiter unten noch näher erläutert werden wird, wird die jeweilige Flüssigkeit unter Zugabe einer geringen Menge von Stroh 8 oder einem anderen Kohlenstoffträger und gegebenenfalls Biomasse 9 und unter Eintragung mechanischer Energie sowie unter Einarbeitung von Luft fein dispergiert und unter Änderung ihrer physikalischen und chemischen Struktur zu einer thixotropen Flüssigkeit hoher Viskosität aufbereitet. Diese Flüssigkeit wird sodann aus der Dispergiervorrichtung 6 abgezogen (Linie 10) und in ein oder mehrere Absetzbecken 11 gepumpt. In dem Absetzbecken 11 erfolgt innerhalb einer verhältnismäßig kurzen Zeit von etwa 24 Stunden eine Alterung der Masse. Diese hat zur Folge, daß am Boden des Absetzbeckens 11 eine geringe Menge von Wasser 12 ausgeschieden wird, während sich darüber die Masse 13 verfestigt. Trotzdem kann sie auch nach dieser Alterung noch mittels geeigneter Pumpen unmittelbar auf eine Rotte gelegt werden.

Im rechten Teil der Darstellung der Fig. 1 ist dann angedeutet, wie die Masse 13 - der Systemlinie 13' folgend -zunächst auf eine Vorrotte A gebracht wird, in der sie auf einer festen, dichten Unterlage 14 mit einer seitlichen Wasserauffangrinne 15 in einzelnen Lagen übereinander zu Reihen 16 aufgeschichtet wird. Zwischen die einzelnen Lagen der Masse 13 werden wieder Lagen von Stroh oder einem anderen Kohlenstoffträger gelegt, und zwar so, daß die Zugabe an Kohlenstoffträger insgesamt, also in der Dispergiervorrichtung und auf der Rotte insgesamt etwa 1 bis 3 % der Flüssigmasse beträgt.

Von der Vorrotte A wird die Masse 13 nach einer Verweilzeit von etwa 7 bis 10 Tagen auf eine Hauptrotte B umgeschichtet, wo die eigentliche mikrobielle Reaktion stattfindet. Bei einer Temperatur von 60 bis 70 Grad C verdampft hier der größte Teil des gebundenen Wassers, so daß die Masse zur Befeuchtung und zur Stützung von Hydratationsvorgängen mit Wasser besprüht werden muß. Hierzu kann das am Grunde des Absetzbeckens 11 gewonnene Wasser 12 verwendet werden; die Linie 12' symbolisiert diesen Verfahrensschritt. Von der Hauptrotte B schließlich wird das Material auf eine Nachrotte C gebracht, wo es bis zur endgültigen Ausreifung belassen wird.

Um die Masse 13 auf der Rotte, insbesondere auf der Vorrotte A und der Hauptrotte B, vor Witterungseinflüssen, und zwar sowohl vor Niederschlägen, als auch starker Sonneneinstrahlung zu schützen, ist über den Rottebahnen eine Abdeckung 17 vorgesehen.

Bei diesem Rotteprozeß wird das flüssige Ausgangsmaterial um bis zu 97 % reduziert, vor allem durch Abgabe des gebundenen Wassers. Insgesamt beträgt die Abbauzeit auf der Rotte ca. 7 bis 8 Wochen. Nach dem Rotteprozeß erhält man aus den vorherigen Abfallstoffen ein hochwertiges Humusprodukt, das unmittelbar als Dünger verwendet werden kann.

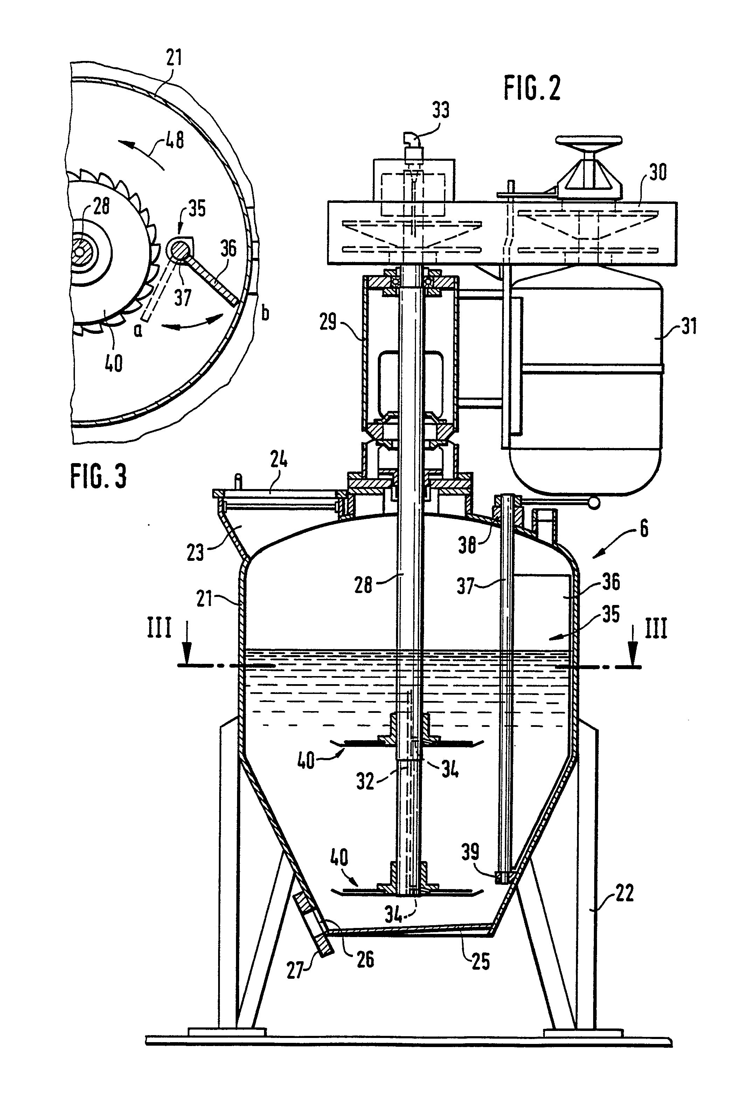

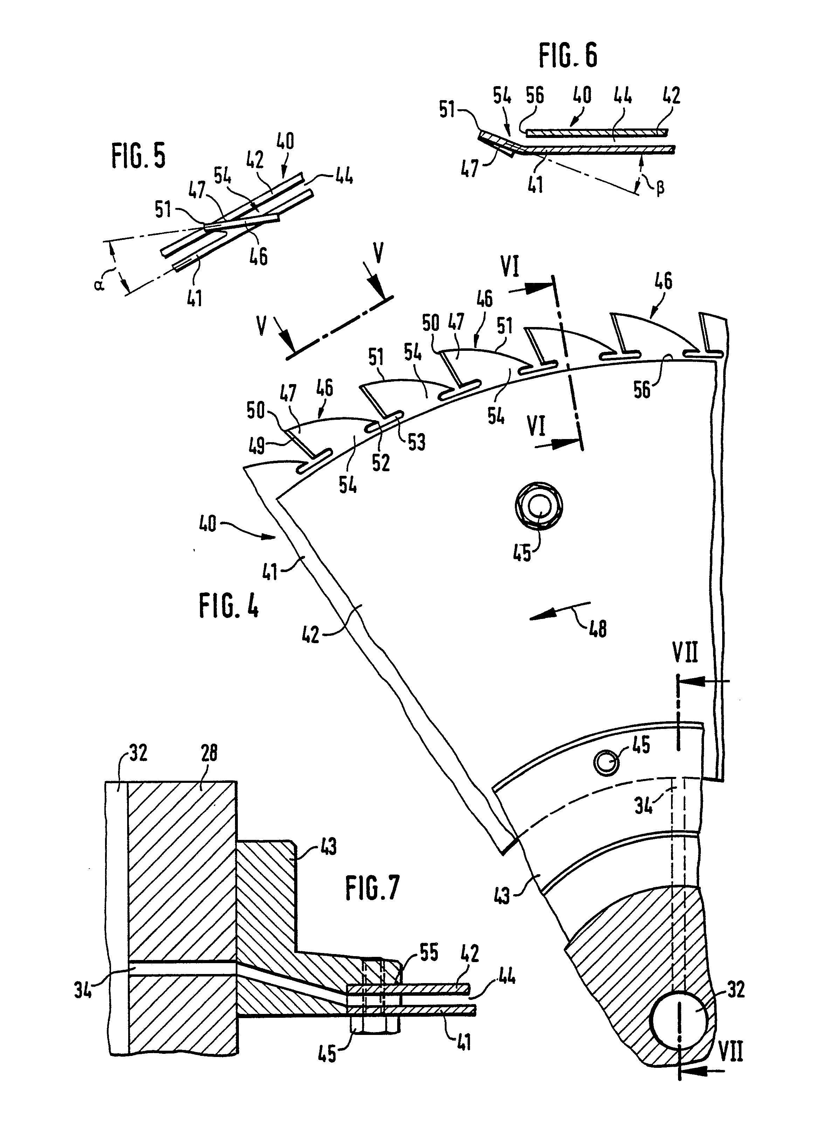

In den Fig. 2 und 3 ist die Dispergiervorrichtung 6 in größerem Maßstab im Längs- und Querschnitt dargestellt; die Fig. 4 bis 7 zeigen dann Einzelheiten des Dispergierwerkzeugs.

Die Dispergiervorrichtung 6 umfaßt zunächst einen Dispergierbehälter 21, der auf einem Ständer 22 ruht. Der Behälter 21 weist im oberen Bereich eine Einfüllöffnung 23 auf, die durch einen Deckel 24 verschlossen werden kann. In seinem unteren Bereich ist der Behälter 21 konisch zulaufend ausgebildet; er besitzt einen schrägen Boden 25, der zu einer Auslauföffnung 26 führt, die ebenfalls durch einen Deckel 27 verschließbar ist. Das Unterteil des Behälters 21 könnte anstelle der konischen Form auch gekrümmt, z.B. eiförmig ausgebildet sein und eine zentrische Auslauföffnung besitzen.

In der vertikalen Längsmittelachse des Dispergierbehälters 21 befindet sich eine Antriebswelle 28, die nach oben hin aus dem Behälter 21 herausragt; die Welle 28 ist dort in einem Gehäuse 29 gelagert. Sie steht über ein in einem Getriebekasten 30 untergebrachtes Getriebe mit einem Antriebsmotor 31, z.B. einem Elektromotor, in kraftschlüssiger Verbindung.

Auf der Antriebswelle 28 befinden sich im dargestellten Ausführungsbeispiel übereinander zwei gleich ausgebildete Dispergierwerkzeuge 40, die im einzelnen anhand der Fig. 4 bis 7 noch beschrieben werden. Die Antriebswelle 28 ist als Hohlwelle ausgebildet; sie weist einen axial verlaufenden Luftkanal 32 auf, der am oberen Ende der Welle 28 in eine Lufteinlaßöffnung 33 und im Bereich der Dispergierwerkzeuge 40 in jeweils einen horizontalen Stichkanal 34 mündet, der zum jeweiligen Dispergierwerkzeug 40 hin führt. Die Lufteinlaßöffnung 33 ist mit einer verstellbaren Düse ausgestattet, um die Menge der bei der Rotation der Dispergierwerkzeuge 40 entstehenden Unterdruckes eingesaugten Luft dosieren zu können.

Der Durchmesser der im zylindrischen Teil des Behälters 21 angeordneten Dispergierwerkzeuge 40 ist etwa halb so groß wie der größte Durchmesser des Behälters 21, so daß zwischen dem Außenumfang der Dispergierwerkzeuge 40 und der Behälterwand ein Ringraum verbleibt. In diesem Ringraum ist eine ausklappbare Barriere 35 angeordnet. Sie besteht aus einem Flügel 36, der an einer Welle 37 befestigt ist; die Welle 37 ist ihrerseits in einem oberen Lager 38 und einem unteren Lager 39 am Behälter 21 gelagert.

Jedes Dispergierwerkzeug 40 besteht aus einer - unteren - Dissolverscheibe 41 und einer konzentrisch und parallel zu dieser angeordneten - oberen - Deckscheibe 42. Beide Scheiben 41 und 42 sind, wie vor allem Fig. 7 erkennen läßt, in ihrem zentralen Bereich von einem Flanschring 43 gehalten, der seinerseits an der Welle 28 befestigt ist. Die beiden Scheiben 41 und 42 sind an dem Flanschring 43 unter Belassung eines Zwischenraumes 44 im Bereich einer Ausklinkung eines Flansches 55 durch geeignete Verbindungsmittel, z.B. Schrauben 45 befestigt. Der Stichkanal 34 führt von dem Luftkanal 32 ausgehend in den Zwischenraum 44 zwischen den beiden Scheiben 41 und 42.

Am Umfang der Dissolverscheibe 41 ist dicht nebeneinander eine Anzahl von Störkörpern 46 angeordnet. Diese Störkörper 46 bestehen im einfachsten Fall aus Vorsprüngen 47, die aus dem Materialzuschnitt für die Dissolverscheibe 41 durch Ausstanzen erzeugt wurden. Die Vorsprünge 47 besitzen an der in Drehrichtung (Pfeil 48) vornliegenden Seite eine gerade Schneide 49; ihre von der äußeren Ecke 50 ausgehende Außenkante 51 verläuft kreisbogenförmig gekrümmt zu einer rückwärtigen Spitze 52. Zwischen jeweils zwei Störkörpern 46 befindet sich etwa im Verlauf des Umfangs der Dissolverscheibe 41 jeweils eine längliche, etwa tangential verlaufende Durchbrechung 53.

Die Störkörper 46 entstehen aus den zunächst ebenen Vorsprüngen 47 dadurch, daß sie um einen Winkel Beta aus der Ebene der Scheibe 41 nach oben herausgebogen (Fig. 6) und sodann um einen Winkel Alpha um eine radial verlaufende Achse verschwenkt werden (Fig. 5); beide Winkel betragen etwa 20 Grad. Dadurch entsteht zwischen der Schneide 49 und der rückwärtigen Spitze 52 eine muldenartige Vertiefung 54, welche das Entstehen eines Hohlsoges im Bereich der rückwärtigen Spitze 52 und der länglichen Durchbrechung 53 begünstigt.

Zur Durchführung des erfindungsgemäßen Verfahrens wird der Dispergierbehälter 21 durch die Einfüllöffnung 23 mit Flüssigkeit gefüllt; die Füllhöhe ist in Fig. 2 angedeutet. Nach dem Schließen des Deckels 24 werden die an der Welle 28 angebrachten Dispergierwerkzeuge 40 in der in Fig. 3 durch einen Pfeil 48 angedeuteten Richtung in Rotation versetzt. Der Flügel 36 der Barriere 35 befindet sich dabei noch in der in Fig. 3 mit a bezeichneten, etwa tangentialen Stellung. Sobald die erforderliche Drehzahl erreicht ist, wird entweder wiederum über die Einfüllöffnung 23 oder in anderer geeigneter Weise ein Kohlenstoffträger zugegeben, z.B. in Form von zerkleinertem Stroh.

Infolge der hohen Umfangsgeschwindigkeit von etwa 40 Meter pro Sekunde und der besonderen Form der Störkörper 46 entsteht im Bereich der in einer Spitze 52 auslaufenden Mulde 54 ein Hohlsogeffekt, der das Entstehen eines Unterdruckes in diesem Bereich der Dissolverscheibe 41 zur Folge hat. Über den Zwischenraum 44 zwischen der Dissolverscheibe 41 und der Deckscheibe 42 wird dann entlang des Außenrandes 56 der Deckscheibe 42, der über den Stichkanal 34 mit dem Luftkanal 32 in der Welle 28 in Verbindung steht, Luft durch die Luftansaugöffnung 33 eingesaugt. Die Menge an Luft kann mittels einer in die Lufteinsaugöffnung 33 eingesetzten Düse exakt dosiert werden. Auf diese Weise gelingt es, Luft in kontrollierter Menge nicht nur unmittelbar in den intensiv bearbeiteten Flüssigkeitsbereich einperlen zu lassen, sondern die Luft auch in einer solchen Menge zu dosieren, daß das durch den Hohlsogeffekt in diesem Bereich entstehende Vakuum nicht gebrochen wird.

Sobald dieser Vorgang abläuft, wird mittels eines Hebels am oberen Ende der Welle 37 diese gedreht und so der Flügel 36 in die Stellung b (Fig. 3) geschwenkt; der Flügel 36 liegt so an der Behälterwand an und wird durch die rotierende Flüssigkeit an diese angepreßt. Die mit hoher Geschwindigkeit rotierende Flüssigkeit wird damit wie an einem Wehr gebrochen, so daß eine Strudelwirkung entsteht, die sich der Rotationsbewegung der gesamten Flüssigkeitsmenge überlagert und in Strömungsrichtung gesehen hinter der Barriere 35 den Unterdruck verstärkt. Durch die doppelwandige Ausbildung der Dispergierwerkzeuge 40 wird es möglich, die eingesaugte Luft genau an der Stelle austreten zu lassen, wo das Vakuum am stärksten ist, nämlich in Strömungsrichtung gesehen hinter der Barriere 35.

Nach einer Bearbeitungszeit von einigen Minuten wird der Antrieb abgeschaltet und kann die durch diesen Bearbeitungsvorgang in eine nahezu kolloide Dispersion mit thixotropen Eigenschaften umgewandelte Gülle an der Auslauföffnung 26 entnommen und wie im Zusammenhang mit Fig. 1 erläutert weiter bearbeitet werden.

In gleicher Weise kann auch Biomasse, z.B. Kompost, zugegeben werden, um das Einsetzen des Rotteprozesses zu beschleunigen.

## Ansprüche

1. Verfahren zum Kompostieren von in flüssiger Form vorliegenden, insbesondere tierische und/oder menschliche Ausscheidungen enthaltenden Abfällen, wie Gülle, Abwasser, Klärschlamm oder dergleichen, dadurch gekennzeichnet, daß die flüssigen Abfälle in einem geschlossenen Behälter unter Zugabe von biologisch abbaubaren kohlenstoffhaltigen Substanzen, wie z.B. Stroh, Holz oder dergleichen in zerkleinerter Form durch Aufwirbelung mittels eines oder mehrerer Dispergierwerkzeuge unter Eintragung von mechanischer Energie und unter kontrollierter Zufuhr von Luft in eine suspensoide Dispersion mit hoher Viskosität umgewandelt und danach in einem aeroben Rotteverfahren kompostiert werden.

2. Verfahren nach Anspruch 1, dadurch gekennzeichnet, daß die mechanische Energie mittels eines durch das Dispergierwerkzeug erzeugten Kavitations- oder Hohlsogeffektes eingetragen und die Zufuhr von Luft unmittelbar in den Bereich der Aufwirbelung der Flüssigkeit so gesteuert wird, daß in dem genannten Bereich ein örtlich begrenztes Vakuum aufrecht erhalten wird.

3. Verfahren nach Anspruch 2, dadurch gekennzeichnet, daß die Luft mittels eines durch das Vakuum bedingten Soges zugeführt und der Sog zur Aufrechterhaltung des Vakuums begrenzt wird.

4. Verfahren nach einem der Ansprüche 1 bis 3, dadurch gekennzeichnet, daß den flüssigen Abfällen geringe Mengen einer aerobe Mikroorganismen enthaltenden Biomasse, wie z.B. Kompost, zugesetzt werden.

5. Verfahren nach einem der Ansprüche 1 bis 4, dadurch gekennzeichnet, daß die dispergierten Abfälle in einem Absetzbecken (11) zwischengelagert und danach auf eine Rotte gelegt werden.

6. Verfahren nach einem der Ansprüche 1 bis 5, dadurch gekennzeichnet, daß das Rotteverfahren mehrstufig durchgeführt wird, wobei die zu kompostierende Masse (13) von einer Vorrotte (A) über eine Hauptrotte (B) in eine Nachrotte (C) umgesetzt wird.

7. Verfahren nach Anspruch 6, dadurch gekennzeichnet, daß die Vorrotte (A) lagenweise aufgebaut wird, wobei zwischen zwei Lagen von dispergierten Abfällen jeweils eine Lage von biologisch abbaubaren kohlenstoffhaltigen Substanzen, wie z.B. Stroh, Holz oder dergleichen angeordnet wird.

8. Verfahren nach einem der Ansprüche 1 bis 7, dadurch gekennzeichnet, daß an biologisch abbaubaren kohlenstoffhaltigen Substanzen insgesamt etwa 1 bis 3 % der Masse der flüssigen Abfälle zugegeben werden.

9. Vorrichtung zum Dispergieren der flüssigen Abfälle gemäß den Ansprüchen 1 bis 8 mit mindestens einem in einem geschlossenen Behälter (21) an einer Antriebswelle (28) angeordneten und um eine Drehachse umlaufenden Dispergierwerkzeug (40), dadurch gekennzeichnet, daß das Dispergierwerkzeug (40) als kreisförmige Scheibe (41) ausgebildet ist, die an ihrem Umfang mit einer Anzahl von dicht nebeneinander angeordneten Störkörpern (46) versehen ist, von denen zumindest Teilbereiche aus der Ebene der Scheibe (41) herausragen und daß im Bereich des Dispergierwerkzeuges (40) Einrichtungen für die Zufuhr von Luft vorgesehen sind.

10. Vorrichtung nach Anspruch 9, dadurch gekennzeichnet, daß das Verhältnis des Durchmessers des Dispergierwerkzeuges (40) zum Durchmesser des Behälters etwa 1 zu 2 beträgt.

11. Vorrichtung nach Anspruch 9 oder 10, dadurch gekennzeichnet, daß in dem Ringraum zwischen dem Dispergierwerkzeug (40) und der Wandung des Behälters (21) eine um eine zur Drehachse des Dispergierwerkzeuges (40) parallele Achse schwenkbare und feststellbare Barriere (35) für den rotierenden Flüssigkeitsstrom angeordnet ist.

12. Vorrichtung nach Anspruch 9, dadurch gekennzeichnet, daß die Störkörper (46) als zahnförmige, über den Umfang der Scheibe hinausragende Vorsprünge (47) ausgebildet sind, die neben einer etwa radial zur Drehachse verlaufenden und unter einem Winkel Alpha zur Ebene der Scheibe (41) nach außen geneigt aus dieser herausragenden Schneide (49) in einer vorzugsweise doppelt gekrümmten Oberfläche in eine rückwärtige, etwa in der Ebene der Scheibe liegende Spitze (52) auslaufen.

13. Vorrichtung nach Anspruch 12, dadurch gekennzeichnet, daß der äußere Rand (51) der Störkörper (46) zwischen dem äußeren Ende (50) der Schneide (49) und der rückwärtigen Spitze (52) stetig gekrümmt verläuft.

14. Vorrichtung nach Anspruch 12 oder 13, dadurch gekennzeichnet, daß am Umfang der Scheibe (41) zwischen den einzelnen Störkörpern (46) Durchbrechungen (53) vorgesehen sind.

15. Vorrichtung nach Anspruch 14, dadurch gekennzeichnet, daß die Durchbrechungen (53) als Langlöcher ausgebildet sind, die etwa tangential zum Umfang der Scheibe (41) verlaufen.

16. Vorrichtung nach einem der Ansprüche 12 bis 15, dadurch gekennzeichnet, daß entlang des Umfangs der Scheibe (41) Austrittsöffnungen für Luft vorgesehen sind, die über einen in der als Hohlwelle ausgebildeten Antriebswelle (28) axial verlaufenden Luftkanal (32) mit der Außenluft in Verbindung stehen.

17. Vorrichtung nach Anspruch 16, dadurch gekennzeichnet, daß die Austrittsöffnungen gleichmäßig über den Umfang der Scheibe (41) verteilt angeordnet sind.

18. Vorrichtung nach Anspruch 16 oder 17, dadurch gekennzeichnet, daß in geringem Abstand von der Scheibe (41) konzentrisch zu dieser und in einer zu deren Ebene parallelen Ebene eine Deckscheibe (42) mit etwa gleichem Durchmesser angeordnet ist und daß der zwischen diesen beiden Scheiben gebildete Zwischenraum (44) der Luftzufuhr dient.

19. Vorrichtung nach einem der Ansprüche 9 bis 18, dadurch gekennzeichnet, daß auf der Antriebswelle (28) zwei oder mehr Dispergierwerkzeuge (40) in gegenseitigem Abstand voneinander übereinander angeordnet sind.

20. Vorrichtung nach Anspruch 19, dadurch gekennzeichnet, daß die Dispergierwerkzeuge (40) unterschiedliche Durchmesser aufweisen.

FIG. 1

EP 0 364 678 A1

FIG.2

FIG. 3

EP 0 364 678 A1

FIG. 6

FIG. 5

FIG. 4

FIG. 7

Europäisches
Patentamt

**EUROPÄISCHER RECHERCHENBERICHT**

Nummer der Anmeldung

EP 89 11 4036

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 616 396 (HANS NEBIKER AG) * Ansprüche; S. 3, Z 4-20; S. 2, Z 59-65 * | 1-8 | C 05 F 17/00 C 05 F 17/02 B 01 F 15/00 B 01 F 7/26 |
| Y | EP-A-0 153 282 (PURACAB) * Ansprüche; S. 3, Z. 4-35; S. 4, Z 13-16; S9, Z 1 - S10, Z6 * | 1-8 | |
| Y | DE-A-3 419 863 (W. RÖSCH et al) * S. 4, Z 17-34; S. 10, Z 11-27; S 11, Z. 15-31 * | 1-8 | |
| Y | FR-A-2 260 535 (HANS NEBIKER AG) * Ansprüche; S. 3, Z 9-18 * | 5 | |
| X | GB-A-1 211 270 (SOCIETE D'ASSISTANCE TECHNIQUE POUR PRODUITS NESTLE S.A.) * fig 1,2; Anspruche; S. 2, Z 36-71 * | 9,10,19 | |
| Y | | 11 | |
| A | DE-A-1 965 771 (INSTITUT CHIMII DREWESINIJ AKADEMII NAUK LATWIISKOI SSR) * Anspruche; S. 6; fig 1,2 * | 13,16, 17 | RECHERCHIERTE SACHGEBIETE (Int. Cl.5) |
| Y | CH-A- 314 316 (KERAG, KESSELSCHMIEDE, APPARATE- UND MASCHINENBAU) * Ansprüche; fig. 1-5 * | 11 | C 05 F B 01 F C 02 F A 01 C |
| A | DE-B-1 189 952 (BADISCHE ANILIN- & SODA-FABRIK AKTIENGESELLSCHAFT) * Ansprüche; fig 1,2 * | 18 | |
| A | BE-A- 652 045 (FORSCHUNGS-INSTITUT Prof. Ing. Chem. P. WILLEMS) * Anspruche; fig 1-12 * -/- | 12 | |

Der vorliegende Recherchenbericht wurde für alle Patentansprüche erstellt

| Recherchenort | Abschlußdatum der Recherche | Prüfer |
|---|---|---|
| DEN HAAG | 05-01-1990 | SCHUT,R.J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A- 559 622 (KODAK SOCIETE ANONYME) * S 9, Z 29-32; S 10, Z 10-12; S 11, Z 4-8, S 12, Z 6-8; fig 1,4 * --- | 9,11,18 | |
| Y | DE-A-3 009 191 (HOOPMAN ONDERZOEK EN ONTWIKKELING B.V.) * Ansprüche * --- | 1 | |
| A | EP-A-0 042 620 (J. OSTERMAIER) ----- | | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 05-01-1990 | SCHUT,R.J. |